# EUROPEAN PATENT SPECIFICATION

(11) **EP 3 877 075 B1**
(45) Date of publication and mention of the grant of the patent: **06.08.2025**
(21) Application number: 18800570.6
(22) Date of filing: 06.11.2018
(51) Int. Cl.: B01D 45/14

(54) **DEVICE FOR SEPARATING SOLID AND/OR LIQUID PARTICLES FROM AIR OR GAS STREAMS**
VORRICHTUNG ZUM ABSCHEIDEN VON FESTEN UND/ODER FLÜSSIGEN PARTIKELN AUS LUFT- ODER GASSTRÖMEN
DISPOSITIF POUR SÉPARER DES PARTICULES SOLIDES ET/OU LIQUIDES DE FLUX D'AIR OU DE GAZ

(43) Date of publication of application: 15.09.2021
(73) Proprietor: Ecofuel Technologies Ltd, St. Julian's St J3203 (MT)
(72) Inventor: GUENTHER, Thomas Andreas, 07181 Portals Nous (Calvia) (ES)
(74) Representative: Linsmeier, Josef
(86) International application number: PCT/EP2018/080323
(87) International publication number: WO 2020/094216

(56) References cited:
- EP-A1- 0 053 508
- CN-B- 104 148 195
- US-A- 3 535 854
- US-A1- 2017 312 760

## Description

### Technical Field

The invention relates to a device for separating solid and/or liquid particles from air or gas streams and, in some forms, a sluice system in which horizontally rotating blades generate a vortex for separation of solid and liquid particles from upwards streaming gases.

### Background

Separation devices such as cyclones or cyclone separators are used to separate particulate matter from fluid streams such as gas or air flows. Cyclones include a cyclone body with a tangential air inlet to create a rotating stream of fluid inside the cyclone body so as to separate the particulate matter by centrifugal forces. The cleaner fluid or gas is usually discharged at an outlet at a top of the cyclone body and the captured particulate matter is discharged via a lower section of the cyclone body.

A problem with known cyclones relates to the efficiency being dependant on the input flow speed of the fluids and usually a high inlet velocity is required. Moreover, the pressure loss over known cyclones is relatively large.

Examples of devices for separating particles from gas streams are disclosed in EP 0 053 508 A1, CN 104 148 195 B, US 2017/312760 A1 and US 3 535 854 A.

The invention disclosed herein seeks to overcome one or more of the above identified problems or at least provide a useful alternative.

### Summary

The invention relates to a device for separating solid and/or liquid particles from air or gas streams according to independent claim 1. Preferred embodiments are defined in the dependent claims. The device is based on the effect of a mechanically induced horizontal vortex within a vertical cylindrical or slightly conical body, which is divided into two chambers. As with cyclones that are "state of the art", the deposition effect is based on the utilization of centrifugal forces. Surprisingly, it has been found that a vertical cylindrical or slightly conical body, in which a vortex is produced by a horizontally rotating impeller and which is mounted directly above a process boiler from where gases flow out even with very small differential pressure, can be passed through by those gases from bottom to top in a way, that once the gases are in the system, they are subjected to centrifugal forces of a vortex, however flow out of the body on the top with almost the same flow speed of the gas streaming in into the body on the bottom side.

In contrast to known cyclones, the efficiency of the device is not dependent on the input flow speed of the fluids. Gases need only a very little positive pressure difference to enter the device. The cleaning efficiency is rather determined by the shape and speed of the horizontally rotating impeller. In contrast to known cyclones, the device can therefore also be applied for gas cleaning within closed vacuum processes and also at very low gas flow rates. Irrespective of their flow speed in the moment of entering the device, the fluids are subjected to the mechanically induced vortex. As in the case of conventional cyclones, liquid and/or solid particles are separated by centrifugal forces. In the case of known cyclones, however, the fluid stream must enter the device at a high speed tangentially from the outside, so that a sufficiently strong vortex can occur. At the disclosed device the entrance is on the lower side and the entrance speed of the fluids can be arbitrary. Furthermore there is no or almost no change of the pressure conditions of the gases before entering the device, and the pressure conditions after having left the device.

At the moment of entry in the device, vertically rising gases to be purified, are captured from the horizontal vortex that is generated by a rotating impeller. As a result, liquid and/or solid particles are thrown onto the vertical sidewall. They are decelerated through the contact with the inner wall of the cylindrical vortex chamber and then move downwards along the wall back into the process boiler, due to gravity. The cleaned gas is pushed through the bore located in the centre of the partition wall by the pressure of the afterwards flowing in gas, and therewith reaches the exit area.

Although the gas is greatly accelerated inside the device, it leaves the apparatus at the top site with a flow rate very similar to the flow rate of the afterwards flowing gas entering the apparatus on the lower site. Even gases which flow from a negative pressured process at very low flow rates can also be cleaned of liquid and/or solid particles without affecting the vacuum conditions of the process.

The mode of operation of the device is similar to that of a cyclone or a centrifuge. Within a vertical cylindrical or slightly conical body, horizontal centrifugal forces move heavier particles away from the centre toward the outside. The heavier particles are thrown onto the inner side of the wall, thereby separated from the gas stream and move back into the process boiler by gravity.

In the case of known cyclones, however, the gas stream must enter the cylindrical body on the topside at a higher speed tangentially from the outside, so that a sufficiently strong vortex can occur. The overpressure introduced with the gas stream leaves the cyclone with the purified gas through an outlet located centrally at the top of the cylindrical body. The separated solid particles slide down on the vertical walls of the cyclone and leave the cyclone via a mostly conically narrowing outlet located centrally on the bottom of the cylindrical body. There are also cyclones in purification or transport systems in which the flow velocity of the gases is accelerated to the necessary input flow speed by a blower before entry tangentially into the cyclone or by suction with a vacuum pump located after the cyclone outlet.

The advantage of the device disclosed is, that with this device the centrifugal effect for cleaning gases can either be applied in systems with atmospheric pressure as well as in pressurized or low pressure systems, not or only minimal influencing the pressure parameters existing in the system. Regardless of the gas inlet velocity, gases are subjected within the device to a vortex and liquid and solid particles are deposited. The still not purified gas, flowing into the apparatus from below, presses the purified gas upward. The cleaned gas leaves the device on the topside at the same flow speed or almost the same flow speed with which the still not purified gas is entering the lower side. The exit velocity of the gas is almost equal to the entry velocity of the gas.

The disclosed device enables cleaning of gases in systems with very low gas flow speed. No tangentially lateral entry into the body is required. As a very small pressure difference is sufficient for the gas to enter the device only minimal input flow velocity of fluids is required. Within a process, the device has no or almost no effect on the pressure parameters before or after the gas purification. In processes with changing gas flow rates, the device ensures that all fluids reaches the same high degree of purification independent from entry speed.

The cleaning effectiveness is adjustable by the rotational speed of the rotor and does not depend on the gas entry speed.

### Description of Figures/Drawings

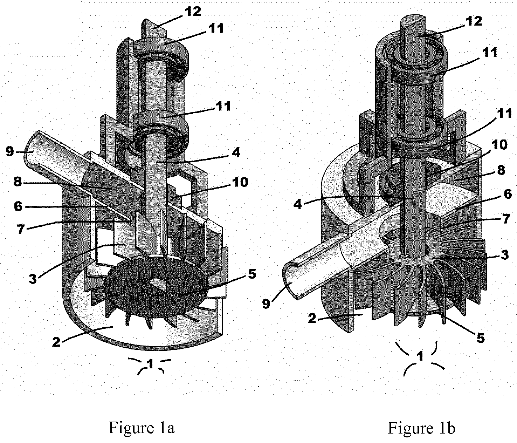

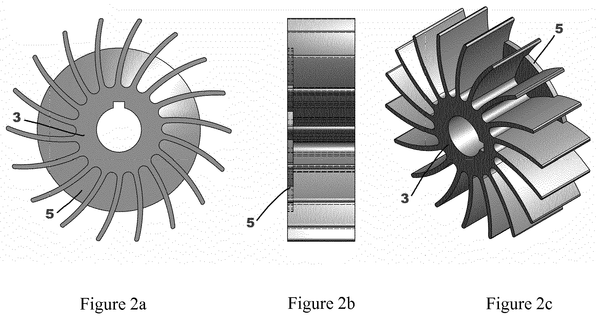

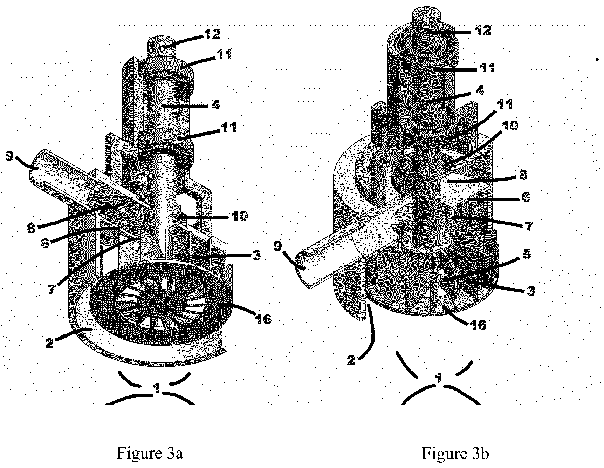

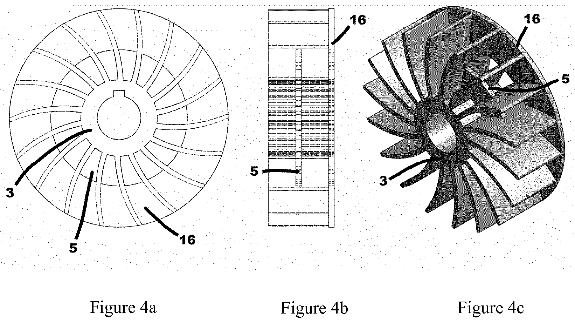

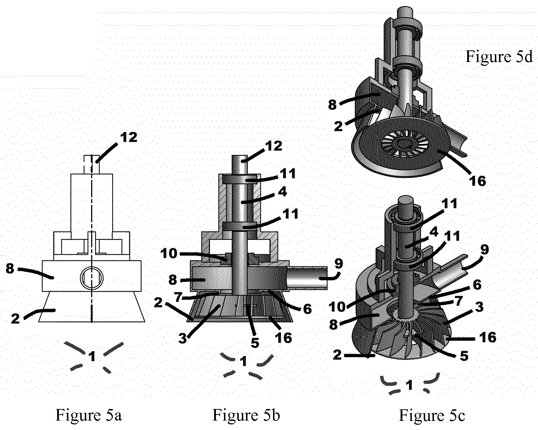

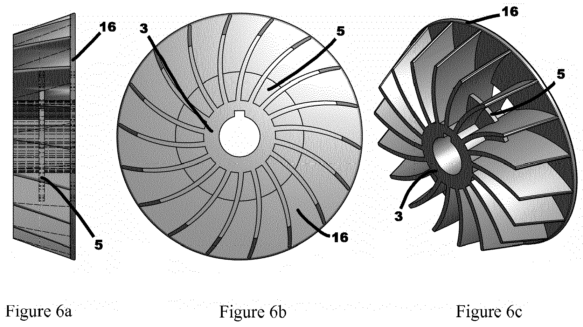

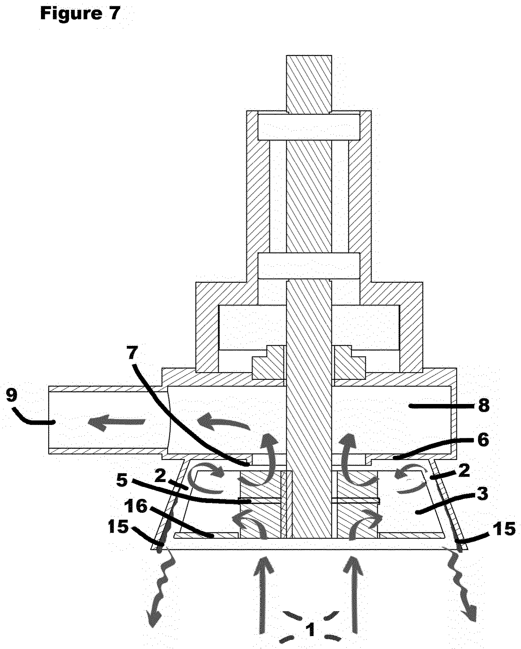

"Figures 1a and 1b" shows an example not according to the invention of a device with cylindrically vortex chamber, simple impeller and a disc mounted centrically below the impeller
   Assignment of numbers "Figures 1a & 1b":
   1). Gas inlet area
   2). Vortex chamber
   3). Impeller
   4). Centrally inserted drive shaft
   5). Disc mounted below impeller
   6). Partition wall between lower and upper chamber
   7). Separating edge
   8). Outlet chamber
   9). Outlet
   10). Shaft seal
   11). Shaft bearings
   12). Shaft drive connection to motor
"Figures 2a to 2c" shows an example not according to the invention of an impeller provided on lower side with a mounted or integrated disc
   Assignment of the numbers "Figures 2a to 2c":
   3). CCW turning Impeller with 18 vanes
   5). On lower side of impeller mounted or integrated disc
"Figures 3a and 3b" shows an example of a device with cylindrically chamber and impeller provided with an integrated partition wall and a disc with centrically bore mounted or integrated on lower side
   Assignment of the numbers "Figures 3a and 3b":
   1). Gas inlet area
   2). Vortex chamber
   3). Impeller - provided with integrated partition wall and provided with on lower side mounted disc with centrically bore -
   4). Centrally inserted shaft
   5). Partition wall inserted in impeller
   6) Partition wall between lower and upper chamber
   7). Separating edge
   8). Outlet chamber
   9). Outlet
   10). Shaft seal
   11). Shaft bearings
   12). Drive shaft connection to motor
   16). On lower side of Impeller mounted or integrated disc with centrically bore
"Figure 4a to 4c" show an example of an Impeller provided with an integrated partition wall and provided a disc with centrically bore mounted or integrated on the lower side
   Assignment of the numbers "Figure 4a to 4c":
   3). Impeller
   5). Integrated partition wall
   16). On lower side of Impeller mounted or integrated disc with centrically bore
"Figure 5a to 5d" shows an example of a device with a conically shaped vortex chamber provided with an conically shaped Impeller with integrated partition wall and provided with a disc with centrically bore mounted or integrated on lower side.
   Assignment of the numbers "Figure 5a to 5d":
   1). Gas Inlet Area
   2). Vortex Chamber
   3). Impeller
   4). Centrically inserted Shaft
   5). Partition wall integrated in Impeller
   6). Partition wall between lower and upper chamber of the device
   7). Separating Edge
   8). Outlet Chamber
   9). Outlet
   10). Shaft Seal
   11). Shaft Bearings
   12). Connection to drive motor
   16).On lower side of Impeller mounted or integrated disc with centrically bore
"Figures 6a to 6c" shows an example of an conically shaped impeller provided with integrated partition wall and provided with a disc with centrically bore mounted or integrated on the lower side
   Assignment of the numbers "Figure 6a to 6c":
   3) Impeller
   5) Integrated partition wall
   16). On lower side mounted or integrated disc with centrically bore
"Figure 7" shows an example of a flow scheme of a device with conically shaped vortex chamber and conically shaped impeller with integrated partition wall and disc with centrically bore mounted or integrated on the lower side of the impeller
   Assignment of the numbers "Figure 7":
   1). Gas inlet area
   2). Vortex chamber
   3). Impeller
   5). Partition wall integrated in Impeller
   6). Partition wall between lower and upper chamber
   7). Separating edge
   8). Outlet chamber
   9). Outlet for cleaned gases
   15). Down ward sliding particles
   16). On lower side mounted or integrated disc with centrically bore

### Detailed Description

Referring to Figures 1a to 7, there is shown an example of a device for separating solid and/or liquid particles from fluid streams, especially from air or gas streams, comprising of a vertical cylindrical or conical body. As best shown in Figure 7, that illustrates work flow within the device is provided as follows. From gas inlet area 1). gas flows vertically from below upwards into the vortex chamber 2). in which a horizontally vortex is formed by the rotation of impeller 3). In the centre the effect of the vortex is the least. To prevent a direct up flow of gas through the centre area, the rotating Impeller 3) has an integrated partition wall 5).

The lower side of the Impeller is provided with a disc with centrically bore. The gas coming from below flows in into the device in the centre. The separated particles sink down on the inner wall of the vortex chamber 2). Gas can only pass through the vortex chamber 2). through areas in which it is necessarily subjected to the horizontally rotating impeller 3) or the existing vortex.

Liquid and/or solid particles entrained in the gas are thrown onto the inner wall of vortex chamber 2). by the centrifugal forces of the vortex. Through contact with the wall, the particles are decelerated and subjected to the gravity, they move down, back into the process boiler. Since the lowest pressure and the smallest centrifugal force prevails in the centre of a vortex, purified gas, which is lighter, collects in the centre area of the Vortex. Pushed by subsequent gas, purified gas flows up to outlet chamber 8). through the centre of the intermediate partition wall 6). Purified gas can then leave the device through outlet 9). The bore located in the intermediate partition wall 6). limits the transition from vortex chamber 2). to outlet chamber 8). to a narrow region in the centre.

The centrically bore in the intermediate partition wall 6). has a separating edge 7). projecting downwards into vortex chamber 2). Separating edge 7). ends with a small distance to the upside of the there under rotating impeller 3). Because outside the centre area the pressure in the vortex is higher, cleaned and lighter gas flows below the intermediate partition wall 6). in direction from outside to inside. Separating edge 7). stops particles that possibly are still entrained by the gas flow.

In the centre area gas can then flow up through the centrically bore of the partition wall 6). in direction to outlet chamber 8). After having being subjected to the vortex still remaining particles entrained by the gas flow are stopped at the separator edge 7). They fall back onto the impeller 3). to be again subjected to the centrifugal effect of the vortex.

Particles already been deposited and decelerated on the inner side of the vertical cylindrically or conical wall of the device are subjected to gravity and slide down. In the version like shown in Figure 7 the impeller is provided with an integrated partition wall 5) and with an underneath located disc with centrically bore 16). This implementation allows for greater independence between up streaming gas and downward sliding particles.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any known matter or any prior publication is not, and should not be taken to be, an acknowledgment or admission or suggestion that the known matter or prior art publication forms part of the common general knowledge in the field to which this specification relates.

Many and various modifications will be apparent to those skilled in the art without departing from the scope of the invention which is defined in the claims.

## Claims

1. A device for separating solid and/or liquid particles from fluid streams, especially from air or gas streams, comprising of a vertical cylindrical or conical body, divided by a horizontal partition wall (6) into an upper and a lower region (8, 2), of which the upper region is characterized thereby that it is provided with one or more outlets (9), and that it is provided either on the top side with a centrally located bore (10), through which a sealed drive shaft (4, 12) is introduced, whose bearings (11) are mounted outside the cylindrical or conical body, and which is provided with a drive unit located outside of the cylindrical or conical body to rotate this shaft (4, 12), or said upper region is provided with an inside centrally located shaft bearing and drive unit, and
wherein the lower region is **characterized by** a single horizontally rotating impeller (3) or multiple horizontally rotating impellers mounted on the drive shaft (4) coming downwards from the upper region, the device further comprising a gas inlet area (1) and a vortex chamber (2), wherein from the gas inlet area (1) gas entraining liquid and/or solid particles can flow vertically from below upwards into the vortex chamber (2) in which a horizontally vortex is formed by a rotation of the impeller (3) or impellers, respectively, the impeller (3) or impellers, respectively, being provided with an internally integrated partition wall (5) and with an underneath located horizontally disc (16) being centrally mounted or integrated on the lower side of the rotating impeller (3) and having a centrically bore through which the gas coming from below can flow in into the device in the centre, wherein the integrated partition wall (5) is configured to prevent a direct up flow of the gas through a centre area of the vortex chamber (2), so that the gas can only pass through the vortex chamber (2) through areas in which it is subjected to the horizontally rotating impeller (3) or the existing vortex, wherein the horizontal partition wall (6), which divides the cylindrical or conical body into the upper and the lower region (8, 2), is provided with a centrically bore and with a perpendicularly downwards extending edge (7) that follows the rounding of the centrically bore and measures in length downwards between 2% and 40% of the diameter of the horizontal partition wall (6), and wherein the distance between the lower end of the edge (7) which is extending vertically downwards and the top of the highest horizontally rotating impeller (3) measures between 0,2% and 25% of the diameter of the horizontal partition wall (6).

2. The device according to claim 1, wherein the centric bore of the horizontal partition wall (6) has a diameter which is minimum 10% greater than the diameter of the mounted drive shaft (4) and less than 80%, preferable between 30% and 40%, of the diameter of the body at this point.

3. The device according to claim 1 or claim 2, wherein the perpendicularly downwards extending edge (7) measures in length downwards 5% of the diameter of the partition wall (6), and wherein the distance between the lower end of the edge (7) which is extending vertically downwards and the top of the highest horizontally rotating impeller (3) measures between 1% and 3% of the diameter of the partition wall (6).

4. The device according to claim 1, **characterized in that** the upper region of the cylindrical or conical body instead of being provided with a drive shaft (4, 12) whose bearings are mounted outside the cylindrical body, is provided with an centrically inside mounted drive shaft unit to drive a single rotating impeller (3) or to drive multiple rotating impellers that are located in the lower region of the cylindrical or conical body.

5. The device according to claim 1, wherein the diameter of the disc (16) mounted or integrated on the lower side of the impeller (3) in the lower region of the cylindrical or conical body is minimum 5%, preferable 30% greater than the diameter of the centric bore of the horizontal partition wall (6), and measures less than 90%, preferable 60% of the diameter of the horizontal partition wall (6),

6. The device according to claim 1, wherein the single horizontally rotating impeller (3) or the multiple horizontally rotating impellers, mounted on the drive shaft (4) coming downwards from the upper region having a minimum of two vanes and is provided with the integrated partition wall (5) in a diameter between 20% and 120%, preferable 60% of the impeller's diameter.

7. The device according to claim 1, wherein single horizontally rotating impeller (3) or multiple horizontally rotating impellers are mounted at the end of the drive shaft (4) coming downwards from the upper region (8) and are provided on the lower side with the mounted or integrated disc (16) having an outside diameter between 40% and 120%, preferably 60% of the impeller's diameter and the centrically bore measuring between 10% and 70%, preferable 30%, of the impeller's diameter.

8. The device according to claim 1, wherein the diameter of the single horizontally rotating impeller (3) or the multiple horizontally rotating impellers, mounted on the drive shaft (4) coming downwards from the upper region, measures between 50% and 99%, preferably 90% of the inside diameter of the cylindrical or conical body of the device.

9. The device according to claim 1, wherein the vertical mounted drive shaft (4, 12), coming downwards from the upper region, comprises a drive shaft connection (12) to a motor which is configured to drive the impeller (3) with a number of revolutions, such that an outer side impeller speed is between 6 m/sec and 60 m/sec, preferably between 20 m/sec and 40 m/sec.

## Patentansprüche

1. Vorrichtung zur Abscheidung von festen und/oder flüssigen Partikeln aus Fluidströmen, insbesondere aus Luft- oder Gasströmen, aufweisend einen vertikalen zylindrischen oder konischen Körper, der durch eine horizontale Trennwand (6) in einen oberen und einen unteren Bereich (8, 2) unterteilt ist, wobei der obere Bereich **dadurch gekennzeichnet ist, dass** er mit einem oder mehreren Auslässen (9) versehen ist, und dass er entweder auf der Oberseite mit einer mittig angeordneten Bohrung (10) versehen ist, durch die eine abgedichtete Antriebswelle (4, 12) eingeführt ist, deren Lager (11) außerhalb des zylindrischen oder konischen Körpers angebracht sind, und die mit einer außerhalb des zylindrischen oder konischen Körpers angeordneten Antriebseinheit zum Drehen dieser Welle (4, 12) versehen ist, oder der obere Bereich ist mit einem innenliegenden, zentral angeordneten Wellenlager und einer Antriebseinheit versehen, und wobei der untere Bereich durch ein einzelnes, horizontal rotierendes Laufrad (3) oder mehrere horizontal rotierende Laufräder gekennzeichnet ist, das bzw. die auf der vom oberen Bereich nach unten kommenden Antriebswelle (4) montiert ist bzw. sind , die Vorrichtung ferner einen Gaseinlassbereich (1) und eine Wirbelkammer (2) aufweist, wobei aus dem Gaseinlassbereich (1) Gas, das flüssige und/oder feste Partikel mit sich führt, vertikal von unten nach oben in die Wirbelkammer (2) strömen kann, in der ein horizontaler Wirbel durch eine Rotation des Laufrads (3) oder der Laufräder gebildet wird, wobei das Laufrad (3) bzw. die Laufräder mit einer inneren integrierten Trennwand (5) und mit einer unten liegenden horizontalen Scheibe (16) versehen sind, welche an der Unterseite des rotierenden Laufrades (3) mittig angebracht bzw. integriert ist und eine zentrische Bohrung aufweist, durch die das von unten kommende Gas mittig in die Vorrichtung einströmen kann, wobei die integrierte Trennwand (5) so ausgebildet ist, dass sie eine direkte Aufwärtsströmung des Gases durch einen Mittelbereich der Wirbelkammer (2) verhindert, so dass das Gas die Wirbelkammer (2) nur durch Bereiche durchströmen kann, in denen es dem horizontal rotierenden Laufrad (3) oder dem vorhandenen Wirbel ausgesetzt ist, wobei die horizontale Trennwand (6), die den zylindrischen oder konischen Körper in den oberen und den unteren Bereich (8, 2) unterteilt, mit einer zentrischen Bohrung und mit einem senkrecht nach unten verlaufenden Rand (7) versehen ist, der der Rundung der zentrischen Bohrung folgt und in der Länge nach unten zwischen 2 % und 40 % des Durchmessers der horizontalen Trennwand (6) misst, und wobei der Abstand zwischen dem unteren Ende des sich senkrecht nach unten erstreckenden Randes (7) und der Oberseite des höchsten horizontal rotierenden Laufrades (3) zwischen 0,2% und 25% des Durchmessers der horizontalen Trennwand (6) beträgt.

2. Vorrichtung nach Anspruch 1, wobei die zentrische Bohrung der horizontalen Trennwand (6) einen Durchmesser aufweist, der mindestens 10 % größer ist als der Durchmesser der montierten Antriebswelle (4) und weniger als 80 %, vorzugsweise zwischen 30 und 40 %, des Durchmessers des Körpers an dieser Stelle beträgt.

3. Vorrichtung nach Anspruch 1 oder 2, wobei die senkrecht nach unten verlaufende Kante (7) in der Länge nach unten 5 % des Durchmessers der Trennwand (6) misst, und wobei der Abstand zwischen dem unteren Ende der senkrecht nach unten verlaufenden Kante (7) und der Oberseite des höchsten horizontal rotierenden Laufrades (3) zwischen 1 % und 3 % des Durchmessers der Trennwand (6) beträgt.

4. Vorrichtung nach Anspruch 1, wobei der obere Bereich des zylindrischen oder konischen Körpers anstelle einer Antriebswelle (4, 12), deren Lager außerhalb des zylindrischen Körpers angebracht sind, mit einer zentrisch innen angebrachten Antriebswelleneinheit zum Antrieb eines einzelnen rotierenden Laufrades (3) oder zum Antrieb mehrerer rotierender Laufräder, die im unteren Bereich des zylindrischen oder konischen Körpers angeordnet sind, versehen ist.

5. Vorrichtung nach Anspruch 1, wobei der Durchmesser der an der Unterseite des Laufrades (3) im unteren Bereich des zylindrischen oder konischen Körpers angebrachten oder integrierten Scheibe (16) mindestens 5%, vorzugsweise 30% größer ist als der Durchmesser der zentrischen Bohrung der horizontalen Trennwand (6) und weniger als 90%, vorzugsweise 60% des Durchmessers der horizontalen Trennwand (6) beträgt.

6. Vorrichtung nach Anspruch 1, wobei das einzelne horizontal rotierende Laufrad (3) oder die mehreren horizontal rotierenden Laufräder, die auf der Antriebswelle (4) montiert sind, die vom oberen Bereich nach unten führt, mindestens zwei Schaufeln aufweisen und mit der integrierten Trennwand (5) in einem Durchmesser zwischen 20 % und 120 %, vorzugsweise 60 %, des Durchmessers des Laufrads versehen ist bzw. sind.

7. Vorrichtung nach Anspruch 1, wobei ein einzelnes horizontal rotierendes Laufrad (3) oder mehrere horizontal rotierende Laufräder am Ende der vom oberen Bereich (8) nach unten führenden Antriebswelle (4) angebracht ist bzw. sind und auf der Unterseite mit der angebrachten oder integrierten Scheibe (16) versehen sind, die einen Außendurchmesser zwischen 40% und 120%, vorzugsweise 60% des Laufraddurchmessers aufweist und die zentrische Bohrung zwischen 10% und 70%, vorzugsweise 30%, des Laufraddurchmessers misst.

8. Vorrichtung nach Anspruch 1, wobei der Durchmesser des einzelnen horizontal rotierenden Laufrads (3) oder der mehreren horizontal rotierenden Laufräder, das bzw. die auf der vom oberen Bereich nach unten führenden Antriebswelle (4) montiert ist bzw. sind, zwischen 50 % und 99 %, vorzugsweise 90 % des Innendurchmessers des zylindrischen oder konischen Körpers der Vorrichtung beträgt.

9. Vorrichtung nach Anspruch 1, wobei die vertikal montierte Antriebswelle (4, 12), die vom oberen Bereich nach unten führt, eine Antriebswellenverbindung (12) zu einem Motor aufweist, der so konfiguriert ist, dass er das Laufrad (3) mit einer solchen Anzahl von Umdrehungen antreibt, dass die Geschwindigkeit an der äußeren Seite des Laufrads zwischen 6 m/sec und 60 m/sec, vorzugsweise zwischen 20 m/sec und 40 m/sec liegt.

## Revendications

1. Dispositif pour la séparation de particules solides et/ou liquides de courants fluides, en particulier de courants d'air ou de gaz, comprenant un corps cylindrique ou conique vertical, divisé par une paroi de séparation horizontale (6) en une zone supérieure et une zone inférieure (8, 2), dont la zone supérieure est **caractérisée par le fait qu'**elle est pourvue d'une ou de plusieurs sorties (9), et qu'elle est pourvue, soit du côté supérieur, d'un alésage (10) situé au centre, par lequel est introduit un arbre d'entraînement étanche (4, 12), dont les paliers (11) sont montés à l'extérieur du corps cylindrique ou conique, et qui est pourvu d'une unité d'entraînement située à l'extérieur du corps cylindrique ou conique pour faire tourner cet arbre (4, 12), ou bien cette région supérieure est pourvue d'un palier d'arbre et d'une unité d'entraînement situés à l'intérieur et au centre, et dans laquelle la région inférieure est **caractérisée par** une seule roue à rotation horizontale (3) ou plusieurs roues à rotation horizontale montées sur l'arbre d'entraînement (4) descendant de la région supérieure, le dispositif comprend en outre une zone d'entrée de gaz (1) et une chambre de vortex (2), dans laquelle, à partir de la zone d'entrée de gaz (1), le gaz entraînant des particules liquides et/ou solides peut s'écouler verticalement du bas vers le haut dans la chambre de vortex (2), dans laquelle un vortex horizontal est formé par la rotation de la roue (3) ou des roues, respectivement, la roue (3) ou les roues, respectivement, étant pourvues d'une paroi de séparation (5) intégrée intérieurement et d'un disque (16) situé horizontalement en dessous, monté au centre ou intégré sur le côté inférieur de la roue rotative (3) et présentant un alésage central à travers lequel le gaz provenant du bas peut s'écouler dans le dispositif au centre, dans lequel la paroi de séparation intégrée (5) est configurée pour empêcher un flux ascendant direct du gaz à travers une zone centrale de la chambre de tourbillon (2), de sorte que le gaz ne puisse traverser la chambre de tourbillon (2) qu'à travers les zones dans lesquelles il est soumis à la roue à rotation horizontale (3) ou au tourbillon existant , dans laquelle la paroi de séparation horizontale (6), qui divise le corps cylindrique ou conique en une zone supérieure et une zone inférieure (8, 2), est pourvue d'un alésage central et d'un bord (7) s'étendant perpendiculairement vers le bas, qui suit l'arrondi de l'alésage central et mesure en longueur vers le bas entre 2 % et 40 % du diamètre de la paroi de séparation horizontale (6), et dans lequel la distance entre l'extrémité inférieure du bord (7) qui s'étend verticalement vers le bas et le sommet de la roue (3) à rotation horizontale la plus élevée est comprise entre 0,2 % et 25 % du diamètre de la cloison horizontale (6).

2. Le dispositif selon la revendication 1, dans lequel l'alésage central de la paroi de séparation horizontale (6) a un diamètre supérieur d'au moins 10 % au diamètre de l'arbre d'entraînement monté (4) et inférieur à 80 %, de préférence entre 30 % et 40 %, du diamètre du corps en ce point.

3. Le dispositif selon la revendication 1 ou 2, dans lequel la revendication 2, dans lequel le bord (7) s'étendant perpendiculairement vers le bas mesure en longueur vers le bas 5% du diamètre de la paroi de séparation (6), et dans lequel la distance entre l'extrémité inférieure du bord (7) qui s'étend verticalement vers le bas et le sommet de la roue (3) à rotation horizontale la plus élevée mesure entre 1% et 3% du diamètre de la paroi de séparation (6).

4. Le dispositif selon la revendication 1, dans lequel la partie supérieure du corps cylindrique ou conique, au lieu d'être équipée d'un arbre d'entraînement (4, 12) dont les paliers sont montés à l'extérieur du corps cylindrique, est équipée d'une unité d'arbre d'entraînement montée au centre à l'intérieur pour entraîner une seule roue rotative (3) ou pour entraîner plusieurs roues rotatives qui sont situées dans la partie inférieure du corps cylindrique ou conique.

5. Le dispositif selon la revendication 1, dans lequel le diamètre du disque (16) monté ou intégré sur le côté inférieur de la roue (3) dans la région inférieure du corps cylindrique ou conique est au minimum 5%, de préférence 30% plus grand que le diamètre de l'alésage centrique de la paroi de séparation horizontale (6), et mesure moins de 90%, de préférence 60% du diamètre de la paroi de séparation horizontale (6),

6. Le dispositif selon la revendication 1, dans lequel la roue unique à rotation horizontale (3) ou les roues multiples à rotation horizontale, montées sur l'arbre d'entraînement (4) descendant de la région supérieure, a un minimum de deux aubes et est pourvue d'une paroi de séparation intégrée (5) d'un diamètre compris entre 20% et 120%, de préférence 60% du diamètre de la roue.

7. Le dispositif selon la revendication 1, dans lequel une seule roue à rotation horizontale (3) ou plusieurs roues à rotation horizontale sont montées à l'extrémité de l'arbre d'entraînement (4) descendant de la zone supérieure (8) et sont pourvues sur le côté inférieur du disque monté ou intégré (16) ayant un diamètre extérieur compris entre 40% et 120%, de préférence 60% du diamètre de la roue et l'alésage central mesurant entre 10% et 70%, de préférence 30%, du diamètre de la roue.

8. Le dispositif selon la revendication 1, dans lequel le diamètre de la roue unique à rotation horizontale (3) ou des roues multiples à rotation horizontale, montées sur l'arbre d'entraînement (4) descendant de la région supérieure, mesure entre 50% et 99%, de préférence 90% du diamètre intérieur du corps cylindrique ou conique du dispositif.

9. Le dispositif selon la revendication 1, dans lequel l'arbre d'entraînement vertical (4, 12), descendant de la zone supérieure, comprend une connexion d'arbre d'entraînement (12) à un moteur qui est configuré pour entraîner la roue (3) avec un certain nombre de tours, de sorte que la vitesse de la roue du côté extérieur est comprise entre 6 m/sec et 60 m/sec, de préférence entre 20 m/sec et 40 m/sec.
